# EUROPEAN PATENT APPLICATION

(11) **EP 1 227 483 A2**
(43) Date of publication of application: **31.07.2002**
(21) Application number: 01307708.6
(22) Date of filing: 11.09.2001
(51) Int. Cl.: G11B 20/10, G11B 20/12

(54) **Digital magnetic recording/reproducing apparatus with means to record additional audio data**

(30) Priority: 17.01.2001 KR 2001002530
(71) Applicant: SAMSUNG ELECTRONICS CO. LTD., Suwon-city, Kyungki-do (KR)
(72) Inventor: Nam, Young-min, Suwon-city, Kyungki-do (KR)
(74) Representative: Geary, Stuart Lloyd

(57) **Abstract**

A digital magnetic recording/reproducing apparatus makes use of underused audio data sectors (15b) of a tape (10) to record additional audio data. The additional audio data may comprise MP3 data. The apparatus is preferably a digital video recording/reproducing apparatus and the additional audio data need not be related to the images recorded on the tape (10).

## Description

The present invention relates to a digital magnetic recording apparatus comprising an analogue-to-digital converter for converting an analogue audio signal into a digital audio signal and recording means for recording digital audio signals from the analogue-to-digital converter on a magnetic tape, the recording means being configured to record signals according to a predetermined pattern of data sectors, and to a digital magnetic reproducing apparatus comprising reproducing means for reproducing digital audio signals from a magnetic tape, the reproducing means being configured to read signals recorded according to a predetermined pattern of data sectors and a digital-to-analogue converter for converting a digital audio signal from the reproduction means into an analogue audio signal.

A digital magnetic recording/reproducing device such as a digital video camcorder records and reproduces images and sound using digital signals. Compared with analogue recording/reproducing apparatuses, digital magnetic recording/reproducing apparatuses have excellent image and sound quality, and easily store and edit the data. In general, digital magnetic recording/reproducing apparatuses employ a 6mm (millimetre) magnetic tape as the recording medium for storing digital data for images and sound.

It has been found that the magnetic tape is not being used as efficiently and advantageously as possible.

A recording apparatus according to the present invention is characterised by a data formatter for formatting digital audio signals, having a format different to those output by the analogue-to-digital converter, for recording in data sectors of said predetermined pattern and the recording means being configured for recording digital audio signals from the analogue-to-digital converter in a first predetermined subset of said data sectors and recording formatted digital audio signals from the data formatter in a second predetermined subset of said data sectors.

Preferably, said first and second subsets are discrete.

Preferably, a recording apparatus according to the present invention includes an encoder for encoding analogue audio signals into a digital format, the encoder providing a source of digital audio signals for the formatter. More preferably, the encoder outputs digital audio signals in MP3 or AC-3 format and, optionally, a memory is provided for buffering the output of the encode.

Preferably, the recording means is configured for selectively recording audio signals in three modes comprising only to said first subset, only to said second subset and contemporaneously to both of said subsets. More preferably, input means are provided for receiving audio signals and the recording means includes means for selecting a recording mode in dependence on the nature of an audio signal received by said input means.

A recording apparatus according to the present invention may include video recording means for recording digital video signals on said tape in predetermined data sectors. Preferably, the recording means is configured for recording data according to a standard in which a plurality of slanted tracks are arranged side-by-side, each track containing a video data sector and an audio data sector, and, within the tracks holding one video frame, the tracks containing the sectors of said first subset precede those containing the sectors of said second subset.

A reproducing apparatus according to the present invention is characterised by a data deformatterfor deformatting digital audio signals read by the reproducing means from data sectors of said predetermined pattern into a format different to those for which the digital-to-analogue converter is configured and the reproducing means being configured for sending digital audio signals read from a first predetermined subset of said data sectors to the digital-to-analogue converter and for sending digital audio signals read from a second predetermined subset of said data sectors to the data deformatter.

Preferably, said first and second subsets (15a, 15b) are discrete.

Preferably, a reproducing apparatus according to the present invention includes a decoder for decoding digital audio signals into an analogue form, the decoder being configured for decoding digital audio signals from the deformatter. More preferably, the decoder is configured for decoding digital audio signals in MP3 or AC-3 format and, optionally, a memory is included for storing the output of the deformatter.

Preferably, a reproducing apparatus according to the present invention includes video reproducing means for reproducing digital video signals from predetermined data sectors on said tape. More preferably, the reproducing means is configured for reproducing data according to a standard in which a plurality of slanted tracks are arranged side-by-side, each track containing a video data sector and an audio data sector and, within the tracks holding one video frame, the tracks containing the sectors of said first subset precede those containing the sectors of said second subset.

A digital magnetic recording and reproducing apparatus may comprise a recording apparatus according to the present invention and a reproducing apparatus according to the present invention.

An embodiment of the present invention will now be described, by way of example, with reference to the accompanying drawings, in which:-
Figure 1 illustrates the track structure of a tape for a digital magnetic recording/reproducing apparatus;
Figure 2 is a block diagram illustrating a digital magnetic recording/reproducing apparatus for recording and reproducing plural types of audio data, in accordance with the principles of the present invention;
Figure 3 is a flowchart showing the steps of a method of recording MP3 data using the digital magnetic recording/reproducing apparatus of Figure 2; and
Figure 4 is a flowchart showing the steps of a method of reproducing MP3 data by using the digital magnetic recording/reproducing apparatus of Figure 2.

Illustrative embodiments of the invention are described below. In the interest of clarity, not all features of an actual implementation are described. It will be appreciated that in the development of any actual embodiment numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill having the benefit of this disclosure.

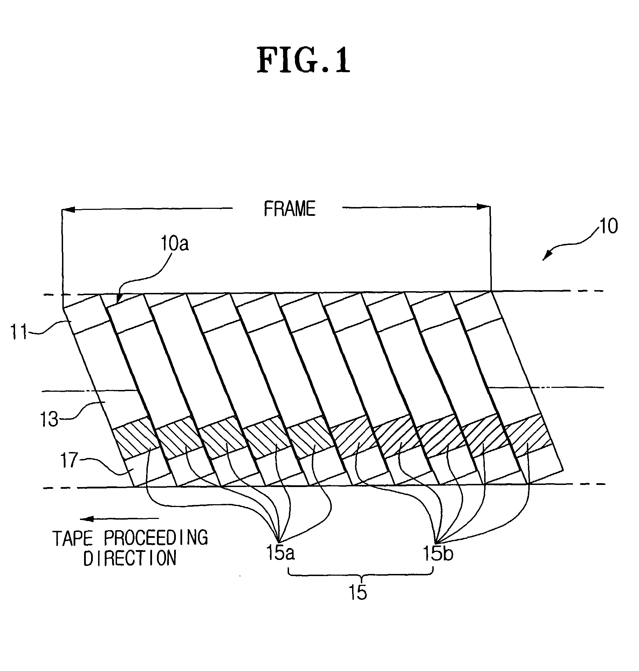

Referring to Figure 1, a 6mm tape 10 is divided into a plurality of tracks 10a slanted at a predetermined angle in the tape proceeding direction. In the NTSC method shown in Figure 1, ten tracks 10a constitute one frame. In the PAL method, twelve tracks 10a constitute one frame. Each track 10a includes four sectors, namely a sub code sector 11, a video sector 13, an audio sector 15 and an insert and track information (ITI) sector 17. The four sectors 11, 13, 15, 17 of the respective tracks 10a are aligned in a longitudinal direction of the tape 10, thereby constituting four channels, namely a sub code channel, a video channel, an audio channel and an ITI channel.

Date/time information and index information are recorded on the sub code sector 11, track information is recorded on the ITI sector 17, image signals and auxiliary information signals thereof are recorded on the video sector 13, and sound signals and auxiliary information signals thereof are recorded on the audio sector 15. Actually, the video sector 13 and the audio sector 15 store the image/sound signals and are together called the recording sector.

When the digital magnetic recording/reproducing apparatus records information on the tape 10, the video sectors 13 of all the tracks 10a are used to record the image signals.

The audio sectors 15 of all the tracks 10a or some tracks 10a are used to record the audio signals according to a recording method thereof. That is, in order to store 16 bit audio data, the audio sectors 15a, 15b of all the tracks 10a are employed. However, in general, 12 bit audio data is stored in the audio sectors 15a of the first five tracks in one frame. Accordingly, the audio sectors 15b of the last five tracks are empty. When sound signals are additionally recorded, the audio sectors 15b are used for dubbing. In reproduction by the digital magnetic recording/reproducing apparatus, the sound signals dubbed on the audio sectors 15b are reproduced with the sound data stored in the audio sectors 15a.

According to a data recording method, the audio sectors 15 and the video sectors 13 of the tape 10 are used merely to store sound and image data. Furthermore, the redundant audio sectors 15b are used merely for dubbing. When dubbing is not performed, the audio sectors 15b are useless. That is, when the user does not perform dubbing by using the digital magnetic recording/reproducing apparatus, the redundant audio sectors 15b remain empty.

In addition, even when the audio sectors 15b are used for dubbing, the sound signals dubbed on the audio sectors 15b are reproduced with the sound signals stored in the audio sectors 15a in the reproduction of the digital magnetic recording/reproducing apparatus. Accordingly, auxiliary audio signals for images and sound can be additionally stored in the audio sectors 15b. As a result, it is difficult to variously utilize the empty audio sectors 15b.

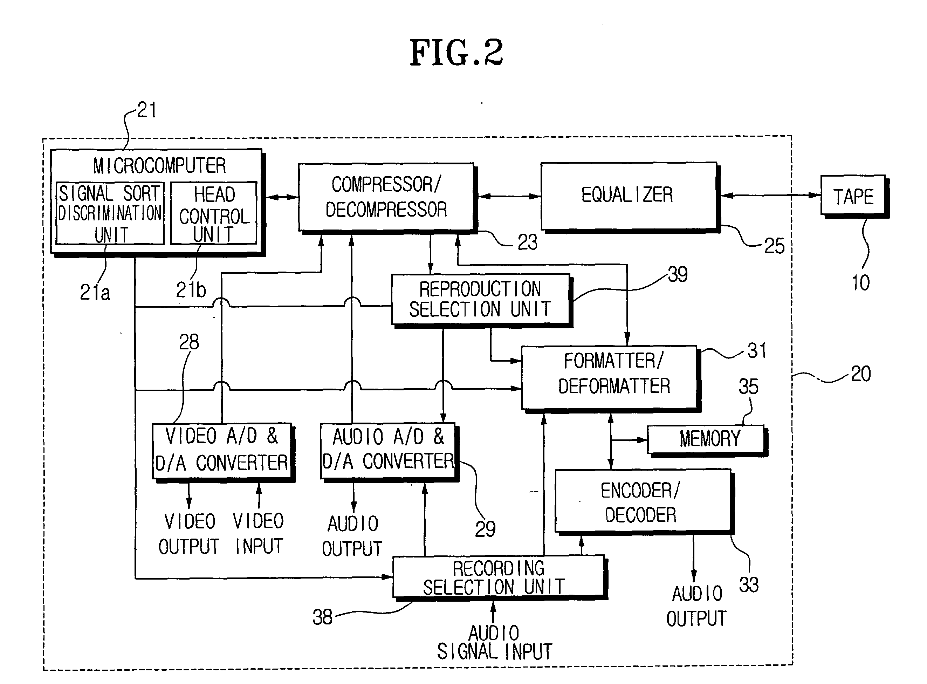

Referring to Figure 2, in this embodiment is exemplified a digital magnetic recording/reproducing device which can record and reproduce audio signals and a different type of MP3 data on the redundant audio sectors 15b of a tape 10 as described above..

The digital magnetic recording/reproducing device includes a microcomputer 21 for controlling its operation, a general equalizer 25, a compressor/decompressor 23, a video analogue-to-digital (A/D) and digital-to-analogue (D/A) converter 28, and an audio A/D and D/A converter 29. In addition, in order to record or reproduce a different type of MP3 data, the digital magnetic recording/reproducing apparatus further includes a formatter/deformatter 31, an encoder/decoder 33 and a memory 35.

The equalizer 25 equalizes the data read from the magnetic tape 10 using a head (not shown) to provide data for signal processing. The audio A/D and D/A converter 29 converts an audio signal from a microphone (not shown) into digital data, converts audio data from the audio sectors 15 of the magnetic tape 10 into an analogue audio signal, and provides the resultant analogue signal to a speaker (not shown). The video A/D and D/A converter 28 performs an operation similar to the audio A/D and D/A converter 29 on the video signal input to the magnetic tape or the video data read from the magnetic tape 10. The video A/D and D/A converter 28 converts an input analogue video signal to a digital signal for storage on the magnetic tape, and converts a digital video signal read from the tape to an analogue video signal.

The compressor/decompressor 23 compresses the signals from the video A/D and D/A converter 28 and the audio A/D and D/A converter 29 before recording the signals on the magnetic tape 10, and decompresses the video and audio data read from the magnetic tape 10. In addition, the compressor/decompressor 23 compresses and decompresses the MP3 data, which will be explained below.

The formatter/deformatter 31 converts the format of the MP3 data and the data recorded on the magnetic tape 10. The MP3 data and the audio data recorded on the audio sectors 15b of the magnetic tape 10 have different formats. Accordingly, the MP3 data cannot be directly recorded on the audio sectors 15b. The formatter of the formatter/deformatter 31 divides and groups the MP3 data to be stored in one audio sector 15b. Thus, the MP3 data is converted into a data format which can be recorded on the audio sector 15b. The deformatter of the formatter/deformatter 31 consecutively receives the audio data, and divides and groups the audio data for operation as MP3 player. Therefore, the MP3 data recorded on the audio sector 15b is converted from the data format which can be stored in the audio sector 15b to an MP3 data format.

The encoder/decoder 33 converts a general analogue signal into MP3 data, or vice versa. That is, when a signal input into the digital magnetic recording/reproducing apparatus is the general audio signal, the encoder of the encoder/decoder 33 converts the audio signal into MP3 data. The decoder of the encoder/decoder 33 converts the MP3 data into a general audio signal.

When the head reads MP3 data recorded on the audio sector 15b of the magnetic tape 10, the memory 35 receives the data from the deformatter of the formatter/deformatter 31, and temporarily stores the data. Accordingly, the memory 35 temporarily stores the output data from the deformatter of the formatter/deformatter 31, and the decoder of the encoder/decoder 33 decodes the MP3 data.

The microcomputer 21 includes a signal type discrimination unit 21a and a head control unit 21b, and controls the operation of the compressor/decompressor 23, the equalizer 25, the formatter/deformatter 31, the encoder/decoder 33, the video A/D and D/A converter 28, and the audio A/D and D/A converter 29. In addition, the microcomputer 21 detects the type of the recorded or reproduced signal using the signal type discrimination unit 21a, and controls the head (not shown) to record different types of audio data in the respective audio sectors 15a, 15b by using the head control unit 21b.

In accordance with the present invention, the digital magnetic recording/reproducing apparatus also includes a recording selection unit 38 and a reproduction selection unit 39. The recording selection unit 38 selectively transmits the input audio signal to the audio A/D and D/A converter 29, the formatter/deformatter 31 and the encoder/decoder 33. The reproduction selection unit 39 selectively transmits the audio data from the compressor/decompressor 23 to the audio A/D and D/A converter 29 and the formatter/deformatter 31. The Qperation of the recording selection unit 38 and the reproduction selection unit 39 is controlled by the microcomputer 21. According to the discrimination result of the signal type discrimination unit 21a, the microcomputer 21 controls the operation of the recording selection unit 38 and the reproduction selection unit 39.

Specific operation buttons (not shown) are provided on an operation panel of the digital magnetic recording/reproducing device 20, so that the user can select recording or reproduction.

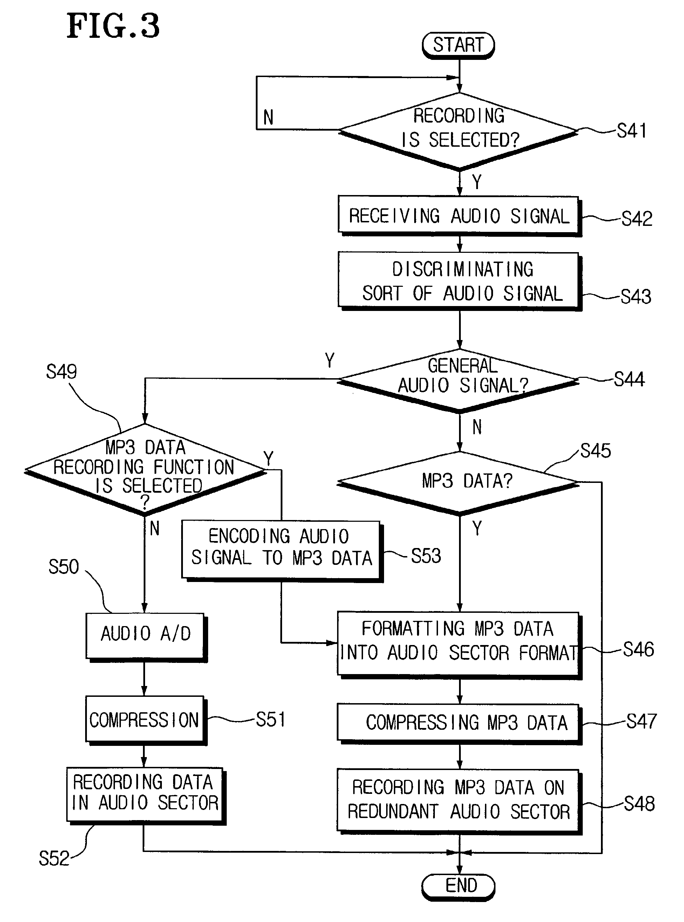

Referring to Figure 3, when the user selects 'recording' through the operation button (step S41), the recording operation of the digital magnetic recording/reproducing apparatus 20 is started.

When an audio signal is input into the digital magnetic recording/reproducing apparatus 20 (step S42), the audio signal is transmitted to the microcomputer 21 through the recording selection unit 38. The signal type discrimination unit 21a of the microcomputer 21 detects the type of the input audio signal (step S43). In this embodiment, the signal type discrimination unit 21a discriminates whether the input audio signal is a general audio signal (step S44) or MP3 data (step S45). However, this operation is performed merely by discriminating whether the audio signal is MP3 data or not. As an exemplary discrimination method, it is determined whether the audio signal has a specific MP3 data code. When the specific MP3 data code is not found in the input signal, the signal type discrimination unit 21a judges that the input audio signal is a general analogue audio signal (step S44). In the case that the specific MP3 data code is found in the input signal, the signal type discrimination unit 21a judges that the input audio signal is MP3 data (step S45).

If the audio signal is MP3 data, the microcomputer 21 controls the recording selection unit 38 so that the input audio signal can be transmitted to the formatter/deformatter 31. The formatter of the formatter/deformatter 31 divides and groups the MP3 data in groups of predetermined size (step S46), and formats the data to be stored in the audio sector 15b of the magnetic tape 10. The formatted MP3 data is compressed in the compressor of the compressor/decompressor 23 (step S47), and recorded in the audio sectors 15 by the head (not shown) (step S48). The head control unit 21b of the microcomputer 21 controls the head so that the MP3 data can be recorded in the redundant audio sectors 15b which are not used to record the general audio data.

If the audio signal is determined to be a general audio signal, as the discrimination result of the signal type discrimination unit 21a, the microcomputer 21 controls the recording selection unit 38 according to a recording method input by the user (step S49). When the user selects a general audio signal input function, the microcomputer 21 controls the recording selection unit 38 so that the input signal can be input into the audio A/D and D/A converter 29. Accordingly, identically to the conventional digital magnetic recording/reproducing apparatus, the audio signal is converted into digital audio data by the audio A/D converter of the audio A/D and D/A converter 29 (step S50), compressed by the compressor/decompressor 23 (step S51), and recorded on the audio sectors 15a of the magnetic tape 10 (step S52). The head control unit 21b of the microcomputer 21 controls the head so that the audio data is recorded on the audio sectors 15a corresponding to the video sectors 13.

If the audio signal is determined to be a general audio signal, as the discrimination result of the signal type discrimination unit 21a, the audio signal can be converted into MP3 data according to the user's selection (step S49). For example, a selection button for inputting the audio signal as MP3 data is provided on the operation panel of the digital magnetic recording/reproducing apparatus. The user can convert the general audio signal into the MP3 data by using the selection button. In this case, the microcomputer 21 controls the recording selection unit 38 so that the input audio signal is transmitted to the encoder/decoder 33. The encoder of the encoder/decoder 33 encodes the audio signal into MP3 data (step S53), and transmits the data to the formatter/deformatter 31. Thereafter, the identical procedure (steps S46 to S48) is performed to record the MP3 data in the redundant audio sectors 15b.

If the user selects a general video/audio recording operation, the audio signal and the video signal are recorded at the same time. That is, identically to the recording operation of conventional digital magnetic recording/reproducing apparatuses, the image and audio signals input through a imaging apparatus (not shown) and the microphone (not shown) are input respectively to the video A/D and D/A converter 28 and the audio A/D and D/A converter 29, and the converted digital video and audio data are compressed in the compressor/decompressor 23, and recorded on the magnetic tape 10.

As described above, when a general audio signal is input, the audio data is recorded in the audio sectors 15a corresponding to the video sectors 13, and when the MP3 data is input, the MP3 data is recorded on the redundant audio sectors 15b. Accordingly, the user can record general audio signals in the front audio sectors 15a of one frame, and simultaneously record MP3 data in the redundant audio sectors 15b. Here, the recorded MP3 data may be audio data dubbed additionally to the sound of the audio sectors 15a recording the sound corresponding to the video sectors 13, or independent audio data.

In addition, even when general audio data is input, the user can convert the audio signal into the MP3 data, and store the data to the redundant audio sectors 15b.

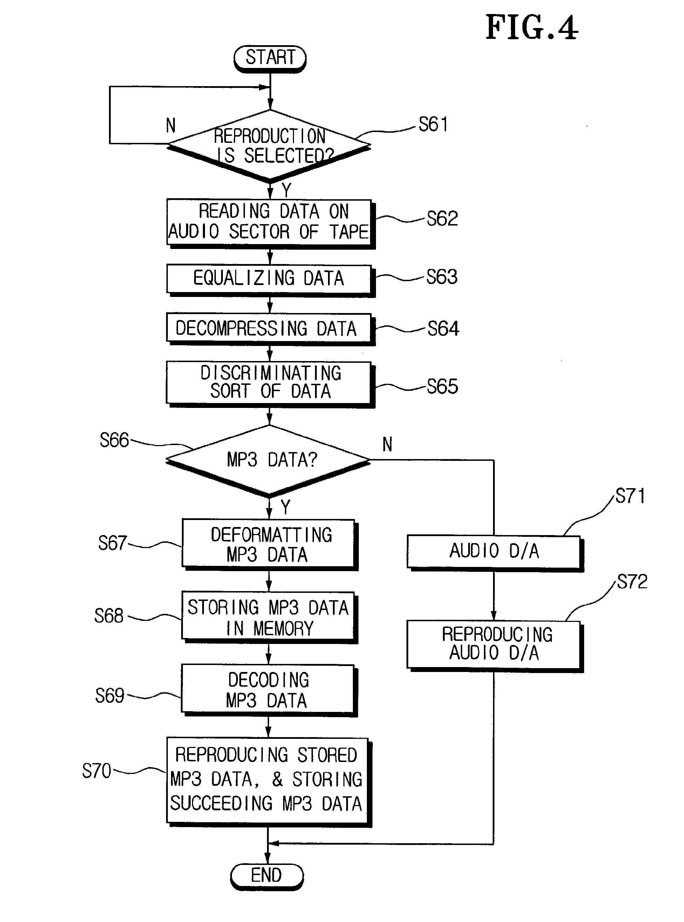

Referring to Figure 4, when the user selects 'reproduction' using the operation button on the operation panel of the digital magnetic recording/reproducing apparatus 20 (step S61), the reproduction operation is started.

The microcomputer 21 reads the signal recorded on the audio sectors 15 of the magnetic tape using the head (step S62). The read signal is equalized by the equalizer 25 (step S63), and input into the compressor/decompressor 23. The compressor/decompressor 23 decompresses the compressed signal (step S64), and inputs the decompressed signal to the reproduction selection unit 39.

The signal type discrimination unit 21a of the microcomputer 21 determines the type of the reproduced audio data or identifies the type of reproduced data (step S65). If the audio data is the MP3 data (step S66), the microcomputer 21 controls the reproduction selection unit 39 so that the audio data is input into the formatter/deformatter 31. In the case that the audio data is general audio data, the microcomputer 21 controls the reproduction selection unit 39 so that the audio data is input into the audio A/D and D/A converter 29 (step S71) and then reproduced (step S72). As described above, whether the audio data is the MP3 data can be easily confirmed by judging whether a specific MP3 data code is included in the reproduced data.

The formatter/deformatter 31 consecutively receives, divides and groups the audio data, and deformats the audio data into the MP3 data for the operation of the MP3 player (step S67). The deformatted MP3 data is stored in the memory 35 (step S68). The decoder of the encoder/decoder 33 receives and decodes the MP3 data from the memory 35 (step S69), and outputs the audio signal. The output audio signal is provided to the speaker (not shown). The speaker reproduces the MP3 data (step S70).

The operation of reading data of a signal which is not yet reproduced and the operation of decoding the MP3 data (steps S62 to S69) are consecutively performed during the reproduction operation (step S70). Accordingly, the MP3 data of the succeeding reproduction section is restored and stored in the memory 35 during the reproduction operation.

For example, when the data stored in the audio sectors 15b is music-related MP3 data, the running time of one song is about 3 to 5 minutes. If a song is stored in the audio sectors 15b, it takes about 30 seconds to 1 minute to restore the data of one song into MP3 data format and store the data in the memory 35. Therefore, when the user selects an MP3 reproduction operation, the MP3 data of the first song is stored in the memory for about 30 seconds to 1 minute, and then the first song is reproduced. While the first song is reproduced, the MP3 data of the succeeding song is stored in the memory 35. Accordingly, the user can listen to music without additional time delay, after storing the MP3 data of the first song in the memory 35. When the restoration of the MP3 data of the first song is finished, the first song starts to be reproduced. However, when the reproduction of the first song and the restoration of the MP3 data of the first song are performed at the same time, the user can reproduce the first song without time delay.

When the user selects a general video/audio reproduction operation, identically to the reproduction operation of conventional digital magnetic recording/reproducing apparatuses, the data of the video sectors 13 and the audio sectors 15a read through the head are inputted respectively to the video A/D and D/A converter 28 and the audio A/D and D/A converter 29 through the equalizer 25 and the compressor/decompressor 23. The video A/D and D/A converter 28 and the audio A/D and D/A converter 29 transmit the data respectively to a display (not shown) and the speaker (not shown). Thus, the digital image and sound are reproduced.

When the data stored in the audio sectors 15b is a dubbing data corresponding to the image and sound stored in the video sectors 13 and the audio sectors 15a, the dubbing MP3 data can be reproduced during the general video/audio reproduction operation according to the user's selection. In addition, when the data stored in the audio sectors 15b does not relate to the image and sound stored in the video sectors 13 and the audio sectors 15a, the MP3 data can be individually reproduced. According to the user's selection, the dubbing sound is reproduced with the image, or the music is independently reproduced.

In the reproduction method of the present invention, the signal type discrimination unit 21a of the microcomputer 21 determines the type of the reproduced audio data, and the microcomputer 21 controls the reproduction selection unit 39 according to the determination result. However, different reproduction methods may be employed. For example, the microcomputer 21 may wholly or selectively reproduce the data in the front audio sectors 15a and the last audio sectors 15b through the head control unit 21b. That is, when one audio data or two types of audio data are reproduced according to the user's selection, the head control unit 21b performs the reproduction operation on the corresponding audio sectors 15a and/or 15b.

In this embodiment, the MP3 data is recorded on the redundant audio sectors 15b. However, the MP3 data may be recorded on the recording sectors including the audio sectors 15a and the video sectors 13.

In addition, the recording and reproduction operations of the MP3 data were exemplified above. However, the present invention can also be employed for a data distinguished from the audio data corresponding to the video data, for example an audio data such as an AC-3 data. AC-3 is a Dolby digital audio compression standard developed by the Digital Coder group at Dolby Labs.

In this embodiment, two types of audio signals are discriminated, recorded on the different audio sectors 15a, 15b, and reproduced. However, the present invention can be applied to three or more types of audio signals. In this case, the encoder/decoder 33 and the formatter/deformatter 31 may perform the encoding/decoding operation and the formatting/deformatting operation on the plural types of data, or a plurality of encoders/decoders and formatters/deformatters may be additionally provided according to the types of the data.

In accordance with the present invention, the different types of audio data can be recorded and reproduced on the magnetic tape for the digital magnetic recording/reproducing apparatus. Especially, the different type of audio data can be recorded and reproduced by using the redundant audio sectors which are not used to store the general audio data. Accordingly, the different type of audio data can be dubbed or the music can be individually recorded, by using the magnetic tape where the images and sound have been recorded.

## Claims

1. A digital magnetic recording apparatus, comprising:-
an analogue-to-digital converter (29) for converting an analogue audio signal into a digital audio signal; and
recording means (21, 23, 25) for recording digital audio signals from the analogue-to-digital converter (29) on a magnetic tape (10), the recording means (21, 23, 25) being configured to record signals according to a predetermined pattern of data sectors (15),
**characterised by**
a data formatter (31) for formatting digital audio signals, having a format different to those output by the analogue-to-digital converter (29), for recording in data sectors of said predetermined pattern; and
the recording means (21, 23, 25) being configured for recording digital audio signals from the analogue-to-digital converter (29) in a first predetermined subset (15a) of said data sectors and recording formatted digital audio signals from the data formatter (31) in a second predetermined subset (15b) of said data sectors.

2. An apparatus according to claim 1, wherein said first and second subsets (15a, 15b) are discrete.

3. An apparatus according to claim 1 or 2, including an encoder (33) for encoding analogue audio signals into a digital format, the encoder (33) providing a source of digital audio signals for the formatter (31).

4. An apparatus according to claim 3, wherein the encoder (33) outputs digital audio signals in MP3 or AC-3 format.

5. An apparatus according to claim 3 or 4, including a memory (35) for buffering the output of the encode (33).

6. An apparatus according to any preceding claim, wherein the recording means (21, 23, 25) is configured for selectively recording audio signals in three modes comprising only to said first subset (15a), only to said second subset (15b) and contemporaneously to both of said subsets (15a, 15b).

7. An apparatus according to claim 6, including input means for receiving audio signals, wherein the recording means (21, 23, 25) includes means (21a) for selecting a recording mode in dependence on the nature of an audio signal received by said input means.

8. An apparatus according to any preceding claim, including video recording means (21, 23, 25, 28) for recording digital video signals on said tape (10) in predetermined data sectors (13).

9. An apparatus according to claim 8, wherein the recording means (21, 23, 25, 28) is configured for recording data according to a standard in which a plurality of slanted tracks (10a) are arranged side-by-side, each track (10a) containing a video data sector (13) and an audio data sector (15), and, within the tracks (10a) holding one video frame, the tracks (10a) containing the sectors (15a) of said first subset precede those containing the sectors (15a) of said second subset.

10. A digital magnetic reproducing apparatus, comprising:-
reproducing means (21, 23, 25) for reproducing digital audio signals from a magnetic tape (10), the reproducing means (21, 23, 25) being configured to read signals recorded according to a predetermined pattern of data sectors (15); and
a digital-to-analogue converter (29) for converting a digital audio signal from the reproduction means (21, 23, 25) into an analogue audio signal,
**characterised by**
a data deformatter (31) for deformatting digital audio signals read by the reproducing means from data sectors of said predetermined pattern into a format different to those for which the digital-to-analogue converter (29) is configured; and
the reproducing means (21, 23, 25) being configured for sending digital audio signals read from a first predetermined subset (15a) of said data sectors to the digital-to-analogue converter (29) and for sending digital audio signals read from a second predetermined subset (15b) of said data sectors to the data deformatter (31).

11. An apparatus according to claim 10, wherein said first and second subsets (15a, 15b) are discrete.

12. An apparatus according to claim 10 or 11, including a decoder (33) for decoding digital audio signals into an analogue form, the decoder (33) being configured for decoding digital audio signals from the deformatter (31).

13. An apparatus according to claim 12, wherein the decoder (33) is configured for decoding digital audio signals in MP3 or AC-3 format.

14. An apparatus according to claim 12 or 13, including a memory (35) for storing the output of the deformatter (33).

15. An apparatus according to any one of claims 10 to 14, including video reproducing means (21, 23, 25, 28) for reproducing digital video signals from predetermined data sectors (13) on said tape (10).

16. An apparatus according to claim 15, wherein the reproducing means (21, 23, 25, 28) is configured for reproducing data according to a standard in which a plurality of slanted tracks (10a) are arranged side-by-side, each track (10a) containing a video data sector (13) and an audio data sector (15) and, within the tracks (10a) holding one video frame, the tracks (10a) containing the sectors (15a) of said first subset precede those containing the sectors (15a) of said second subset.

17. A digital magnetic recording and reproducing apparatus comprising a recoding apparatus according to any one of claims 1 to 9 and a reproducing apparatus according to any one of claim 10 to 16.

18. A digital magnetic recording apparatus, comprising:
an analog-to-digital converter converting an input audio signal into digital data;
a formatter formatting the audio signal in an appropriate size to be stored in respective recording sectors of a magnetic tape selected from among a first plurality of sectors of the magnetic tape;
a recording selection unit selectively transmitting the input audio signal to one selected from among said formatter and said analog-to-digital converter, in dependence upon a type of the audio signal; and
a control unit controlling a head to record output data from said analog-to-digital converter on a second plurality of sectors of the magnetic tape and to record output data from said formatter on the first plurality of sectors of the magnetic tape, said first and second pluralities of sectors being distinguishable.

19. The apparatus of claim 18, further comprising an encoder converting the input audio signal into a predetermined digital data, and providing the digital data to said formatter.

20. The apparatus of claim 19, the predetermined digital data being MP3 data.

21. The apparatus of claim 19, the predetermined digital data being AC-3 data.

22. The apparatus of claim 19, further comprising a discrimination unit detecting a type of the input audio signal, the detected type being one type selected from among a plurality of types of data, said recording selection unit being controlled in dependence upon result of said detecting performed by said discrimination unit.

23. The apparatus of claim 22, said plurality of types of data including at least MP3 data, analog data, and digital data which is not MP3 data.

24. The apparatus of claim 23, the magnetic tape including at least said first plurality of sectors, said second plurality of sectors, and general video sectors, said general video sectors storing video data, said second plurality of sectors being general audio sectors storing audio data corresponding to the video data, said first plurality of sectors being redundant audio sectors.

25. The apparatus of claim 18, further comprising a discrimination unit discriminating a type of the input audio signal, said recording selection unit being controlled in dependence upon result of said discriminating performed by said discrimination unit.

26. The apparatus of claim 18, the magnetic tape including at least said first plurality of sectors, said second plurality of sectors, and general video sectors, said general video sectors storing video data, said second plurality of sectors being general audio sectors storing audio data corresponding to the video data, said first plurality of sectors being redundant audio sectors.

27. A digital magnetic reproducing apparatus, comprising:
a digital-to-analog converter converting a first type of audio data read from a magnetic tape to an analog audio signal;
a deformatter deformatting a second type of audio data read from the magnetic tape;
a decoder decoding deformatted data output from said deformatter; and
a reproduction selection unit selectively transmitting general audio data read from the magnetic tape to one selected from among said deformatter and said digital-to-analog converter, in dependence upon a type of the general audio data, said general audio data including said first and second types of audio data.

28. The apparatus of claim 27, said deformatting of said second type of audio data corresponding to dividing and grouping said second type of audio data to produce data having a predetermined structure.

29. The apparatus of claim 28, further comprising a discrimination unit detecting said type of the general audio data, said reproduction selection unit being controlled in dependence upon the detected type resulting from said detecting performed by said discrimination unit.

30. The apparatus of claim 29, further comprising a memory temporarily storing an output of said deformatter, and providing the stored output to said decoder.

31. The apparatus of claim 30, the data having the predetermined structure corresponding to data selected from among MP3 data and AC-3 data.

32. The apparatus of claim 30, said decoder inputting the data having the predetermined structure and outputting analog data.

33. The apparatus of claim 28, the data having the predetermined structure corresponding to data selected from among MP3 data and AC-3 data.

34. The apparatus of claim 27, further comprising a discrimination unit detecting said type of the general audio data, said reproduction selection unit being controlled in dependence upon the detected type resulting from said detecting performed by said discrimination unit.

35. The apparatus of claim 27, further comprising a memory temporarily storing an output of said deformatter, and providing the stored output to said decoder.

36. The apparatus of claim 27, said second type of audio data being provided to said deformatter corresponding to MP3 data.

37. A method recording different types of audio data on a magnetic tape for a digital magnetic recording/reproducing device, comprising:
detecting a type of an input audio signal;
when a format of the input audio signal does not correspond to a recording format of recording sectors of the magnetic tape, formatting the input audio signal in an appropriate size to be stored in the recording sectors of the magnetic tape; and
recording a plurality of different types of audio signals in respective recording sectors of the magnetic tape.

38. The method of claim 37, the magnetic tape including general audio sectors storing general audio data, general video sectors storing video data corresponding to said general audio data, and said recording sectors recording said formatted data, said recording sectors being redundant audio sectors, said redundant audio sectors being distinguishable from said general audio and video sectors.

39. The method of claim 37, further comprising encoding the input audio signal into predetermined digital data, said encoding being performed after said detecting and before said formatting.

40. The method of claim 39, said predetermined digital data being MP3 data.

41. The method of claim 39, said encoding being performed according to a selection.

42. The method of claim 41, said selection corresponding to a selection performed by a user.

43. The method of claim 42, the magnetic tape including general audio sectors storing general audio data, general video sectors storing video data corresponding to said general audio data, and said recording sectors recording said formatted data, said recording sectors being redundant audio sectors, said redundant audio sectors being distinguishable from said general audio and video sectors.

44. A method reproducing plural types of audio data stored on respective recording sectors of a magnetic tape for a digital magnetic recording/reproducing device, comprising:
detecting at least one type of audio data read from said respective recording sectors of the tape, said at least one type including at least a first type and a second type;
performing one selected from among digital-to-analog conversion and deformatting, said digital-to-analog conversion being selected and converting digital audio data read from the tape to analog audio data when said detecting detects a first type of audio data, said deformatting being selected and deformatting the audio data read from the tape when said detecting detects a second type of audio data, said first and second types being distinguishable;
decoding said deformatted audio data; and
reproducing one selected from among the digital-to-analog converted audio data and the decoded audio data.

45. The method of claim 44, said deformatting and decoding being performed before said reproducing.

46. The method of claim 45, said second type of data corresponding to a predetermined structure of digital data, said first type of data corresponding to digital data other than said predetermined structure of digital data.

47. The method of claim 46, said predetermined structure of digital data corresponding to MP3 data.

48. The method of claim 47, said decoding corresponding to generating analog data from the MP3 data.

49. The method of claim 46, said decoding corresponding to generating analog data from the digital data having the predetermined structure.

50. The method of claim 44, said deformatting corresponding to generating MP3 data from the digital audio data read from the tape.
